# EUROPEAN PATENT SPECIFICATION

(11) **EP 0 935 005 B1**
(45) Date of publication and mention of the grant of the patent: **24.04.2002**
(21) Application number: 98200334.5
(22) Date of filing: 05.02.1998
(51) Int. Cl.: C22B 7/02, C22B 7/00

(54) **Process for treating metallic dust, mostly oxididised waste, in particular galvanising dust and/or steelworks smoke**
Verfahren zum Behandeln von metallischem Staub, wesentlich oxidierten Abfällen, insbesondere Galvanisierungsstaub und/oder Stahlwerkenrauch
Procédé de traitement de poussières métalliques, principalement déchets oxidés, notamment poussières provenant des procédés de galvanisation et/ou fumières des acièries

(43) Date of publication of application: 11.08.1999
(73) Proprietor: Bisol S.p.A., 31053 Pieve di Soligo (Treviso) (IT)
(72) Inventor: Bisol Francesco, 31053 Pieve Di Sologo, Treviso (IT)
(74) Representative: Cantaluppi, Stefano

(56) References cited:
- EP-A- 0 244 910
- EP-A- 0 551 155
- WO-A-96/23905
- FR-A- 848 049
- VAND DER PAS V ET AL: "A fundamental study of cobalt cementation by zinc dust in the presence of copper and antimony additives" HYDROMETALLURGY, vol. 43, 1996, pages 187-205, XP002071678
- ZUNKEL A D: "ELECTRIC ARC FURNACE DUST MANAGEMENT: A REVIEW OF TECHNOLOGIES" IRON AND STEEL ENGINEER, vol. 74, no. 3, March 1997, pages 33-38, XP000689855
- CORSINI T: "TREATMENT OF EAF DUST BY A TEACHANT PROCESS" STEEL TIMES - INCORPORATING IRON & STEEL, vol. 222, no. 10, 1 October 1994, page 400 XP000469085

## Description

The present invention relates to a method of treating mostly oxidized metallic dust, particularly galvanizing dust, and/or steelworks smoke.

A primary object of the invention is to provide an inexpensive method which enables almost all of the metals contained in the aforementioned dusts to be recovered in the form of reusable materials, preventing or at least substantially reducing the production of non-reusable residues destined for storage in dumps.

The term "galvanizing dust" as used in the present description means the oxidized material resulting from the treatment of galvanizing ash which constitutes a typical by-product of hot-dip galvanizing plants.

An example of the composition of galvanizing dust is as follows (percentages by weight):

| | |
|---|---|
| zinc | 50-70% (in oxide form) of which about 5-10% of the total weight of the dust is constituted by metallic zinc; |
| iron | 0.5-0.8% |
| lead | 0.4-1.5% |
| copper | 0.01-0.05% |
| aluminium | 0.2-0.5% |
| tin | 0.01-0.03% |
| magnesium | 0.05% approx. |
| chlorine | 3-10% |
| ammonium | 1-5%. |

In the present description, "steelworks smoke" is intended to define the smoke which can be recovered from scrap-metal treatment plants. The high zinc content of this smoke makes its recovery desirable.

At the moment, the following methods are normally implemented for treating steelworks smoke and recovering the zinc.

In a first method, the steelworks smoke, which has a zinc content of between 15 and 30%, is treated by a basic electrolytic process in ammonium chloride; the material leached with NH₄OH and HCl permits the recovery, by pressure filtering, of the iron which is pelletized with carbon powder and recycled in the steelworks. The solution electrolytically enriched with zinc produces a poor-quality electrolytic zinc since it is not possible to precipitate the impurities in a basic solution. The cathodes produced, which have a zinc content of between 87 and 92% are marketable only for plants which treat zinc waste to produce secondary zinc.

In a second method the steelworks smoke is treated with a plasma torch in a furnace to produce cast iron which can be recycled in the steelworks and an impure zinc oxide which is stored in dumps. This method succeeds in producing materials useful for the steelworks and in reducing the volumes to be stored in dumps. The impure oxides, which represent 30-35% of the total and which have a zinc content greater than 60%, have no industrial use and, at the moment, are stored in dumps. In spite of its high zinc content, this material is in fact penalized by its chlorine content and can be treated neither in electrolytic plants in sulphuric acid, nor by imperial smelting.

The oxides could, however, be used in imperial smelting plants after leaching in water but the leaching waters would have to be treated in a purification plant, causing considerable problems.

In a third method, again starting with steelworks smoke having a zinc content of from 15 to 30%, a Waelz rotary furnace is used at a temperature of about 1,100°C to produce a chlorine-rich impure zinc oxide and a slag constituted by iron and other metals which is stored in dumps. After leaching in water, this oxide can be used in imperial smelting plants and the leaching waters are treated in a purification plant.

In practice, the first method mentioned above constitutes a step forwards with respect to the other two methods since the disposal of waste in dumps is avoided.

Of the remaining two methods, the second achieves a greater reduction in the volumes to be disposed of in dumps and could achieve complete re-use of the smoke if the oxides were leached but, in this case the leaching waters would have to be treated.

Other processes for treating metallic dusts resulting from electric steel works are known from European patent n. 551155 and PCT International application n. 96/23095.

The problem of the present invention is that of providing a method of treating metallic dust, mainly oxidized dust containing zinc, conceived to overcome the limitations set out above with reference to the prior art mentioned.

This problem is solved by means of a method according to the appended claims.

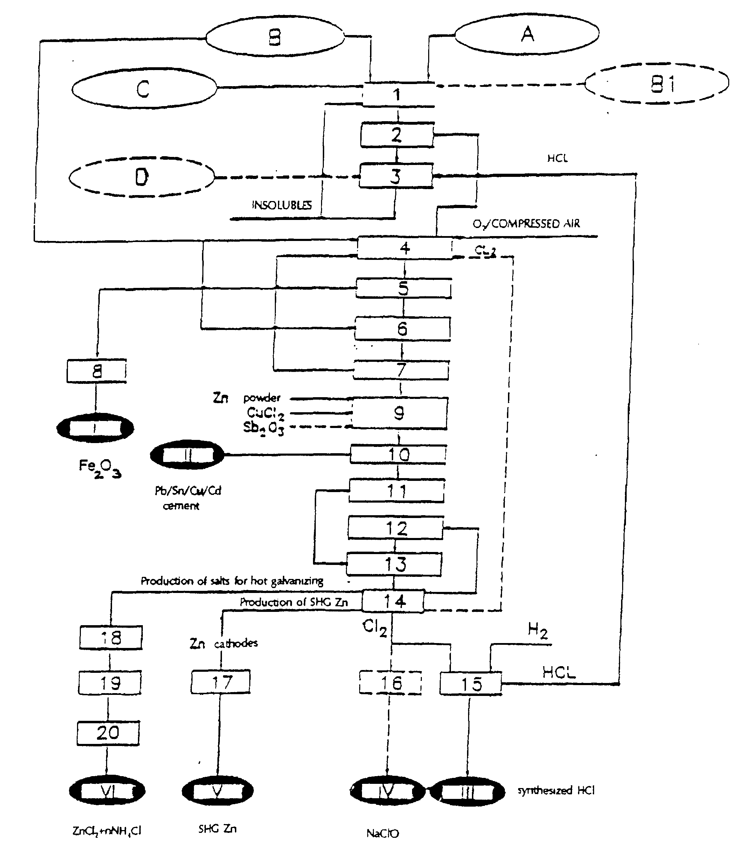

Further advantages and characteristics of the method according to the invention will become clear from the following detailed description, given with reference to the appended drawing in which a flow diagram of a comprehensive treatment method is given by way of non-limiting example.

The raw material supplied to the treatment process is constituted by galvanizing dust as defined above, indicated A on the flow chart. This dust is supplied to a first leaching step 1 carried out with the use of hydrochloric acid or exhausted hydrochloric acid.

The supply to the leaching step may also comprise steelworks smoke, indicated B, and/or pre-enriched steelworks smoke B1.

The term "pre-enriched steelworks smoke" is intended to comprise pre-treated steelworks smoke having a zinc content, expressed as the oxide, typically of more than 40% by weight and preferably of about 50-65% by weight. This material can be produced, for example, by the subjection of the steelworks smoke to a basic leaching step with ammonium hydroxide and hydrochloric acid to bring the metals into solution, except for the insoluble iron which is separated and pelletized with carbon powder in order to be sent to supply the steelworks. The basic leaching solution thus enriched with zinc can be supplied to the acid leaching step 1 carried out according to the invention.

The term "pre-enriched steelworks smoke" is also intended to comprise products resulting from heat treatment of the steelworks smoke, for example, with a Waelz rotary furnace or by plasma torch treatment.

Fluxing sludges, which constitute a by-product of hot-galvanizing processes may also be supplied to the acid-leaching step according to the invention. These sludges, which contain mainly iron and zinc in the form of hydroxides and chlorides, together with ammonium chloride, result from an oxidation treatment of residues from the post-washing of the galvanized materials.

In the method according to the invention, these fluxing sludges D may be supplied to the first leaching step 1 or, preferably, as indicated in the diagram, to a second leaching step, indicated 3, to which the leaching residue of the first step is supplied after it has been subjected to a settling step 2, together with the hydrochloric acid or exhausted acid.

In the preferred embodiment, the hydrochloric acid used in the leaching steps is exhausted hydrochloric acid coming from acid pickling baths, particularly from the pickling carried out prior to galvanizing.

The acid leaching in the first step is preferably carried out at a pH value of between 1 and 4, preferably of 2, at a temperature of between 40 and 90°C, preferably at about 80°C.

The second, optional leaching step 3 is preferably carried out at a pH of less than 2, at a temperature of between 40 and 90°C, preferably of about 60°C.

Any insoluble materials present in the feed are separated and removed from the second leaching step 3.

The leaching solution coming from the acid-leaching steps and particularly the solution coming from the settling step 2 which contains zinc and iron and which may also contain smaller quantities of other metals such as copper, tin, lead, cadmium, chromium, magnesium, manganese, nickel, cobalt and aluminium in the form of chlorides, is supplied to an oxidation step 4 carried out with the use of an oxidizing agent such as, for example, oxygen, compressed air, or hydrogen peroxide. Chlorine, for example, coming from a subsequent acid electrolysis step which will be described below, may also be supplied as an oxidizing agent in this oxidation step.

A quantity of enriched steelworks smoke B may also be supplied at the supply stage. The oxidation is carried out in conditions such as to oxidize the iron to the trivalent state and to cause it to precipitate. The precipitated iron is filtered in a step 5, for example, by means of a filter press, and is calcined in a step 8 to produce ferric oxide which can be supplied as a useful product to the steelworks.

The oxidation reaction may be carried out in two steps; thus, for example, after the first step 4, a second oxidation step 6 may be carried out with the supply, for example of oxygen, compressed air or hydrogen peroxide. The second oxidation step is followed by a filtration step 7, possibly with recycling of the oxidation product to step 4.

The oxidation reactor of step 4 generally operates at a pH of between 1.5 and 3.5, preferably at a pH of about 2.5, at a temperature of between 40 and 90°C, preferably at a temperature of 80°C. The second oxidation step 6, when it is implemented, generally takes place at a pH of between 2.5 and 5, preferably at a pH of 4.5, in temperature conditions similar to those of the first oxidation step 4.

The flow coming from the filtration step 7, from which the iron present in the leaching solution has been removed, is supplied to a cementation step 9 to which zinc powder, copper chloride, and possibly antimony trioxide, are supplied. Cementation is carried out to precipitate metallic impurities which are undesirable in the subsequent electrolytic zinc-extraction step. The zinc powder is supplied in this step in sufficient quantity to cement the metallic impurities of metals more noble than zinc in the electrochemical series, such as, in particular, lead, tin, cadmium, copper, nickel, cobalt and germanium. The cementation reaction is carried out at a pH of between 3.5 and 5.5, preferably 4.5, at a temperature of between 40 and 90°C, preferably at a temperature of about 80°C. The precipitate is filtered in a step 10 to give reusable copper cements also containing lead, tin and cadmium.

The zinc chloride solution coming from step 10, cleansed of impurities and having a zinc content of about 150 g/litre, is sent to a storage step 11, cooled at 13, and then supplied to an acid electrolysis step 14 to produce high purity (SHG) electrolytic zinc. The cells are of the Hybinette type with anode and cathode compartments separated by a polypropylene or fibreglass-reinforced plastics membrane. The anode compartment is supplied with a zinc chloride electrolyte, without ammonium, with a pH of between 1 and 2. The level in the anode compartment is kept higher than that in the cathode compartment to prevent all of the problems connected with the relationship of the catholyte in contact with the nascent chlorine at the anode. The electrolysis is carried out from a pH of between 1 and 4, preferably at a pH of 2, at a temperature of between 30 and 50°C, preferably about 40°C, with a current density of between 100 and 2000 A/m², preferably between 200 and 400 A/m². It has been found that any ammonium chloride still present in the electrolyte at a concentration of up to about 30-35 g/litre does not upset the electrolysis process and is recovered by cleansing from the electrolysis step by crystallization, together with zinc chloride. The zinc chloride and ammonium chloride can be reused to produce salts for hot galvanizing. The cleansing material from the electrolysis step is supplied to a subsequent evaporation step 18, a crystallization step 19, and a centrifuging step 20, to produce zinc and ammonium chlorides.

Zinc cathodes of SHG purity are extracted by the electrolysis step and are sent for casting to produce SHG zinc in pigs or large ingots.

The chlorine produced supplies a plant 15 for producing synthesized hydrochloric acid which can be sold or possibly used in the acid leaching step 3.

Some of the chlorine produced in the electrolysis step may be sent to the oxidation step 4. If necessary, the chlorine produced may be treated with sodium hydroxide in a step 16 to produce sodium hypochlorite.

The exhausted electrolyte from the electrolysis step is sent for storage at 12 to be mixed in the next step 13 with the purified zinc chloride solution coming from the cementation process 9 to be reused in the electrolysis step.

The method according to the invention is particularly advantageous when it is associated with a hot-galvanizing plant so as to make use of the exhausted pickling acids as leaching agents thus permitting the treatment of galvanizing dust which constitutes a considerable by-product of the galvanizing process; the method also enables the fluxing sludges of hot galvanizing plants to be treated. Moreover, as has been seen, the method enables steelworks smoke, and particularly steelworks smoke enriched with zinc, to be treated together with the aforementioned residual by-products. The method according to the invention thus enables the residues produced by known methods for the treatment of steelworks smoke to be treated, avoiding their disposal in dumps. The basic leaching solutions of the steelworks-smoke treatment processes are thus supplied to the acid leaching step 3 according to the invention. Similarly, after the acid leaching process according to the invention, purification and electrolysis in HCl, the impure oxides produced by the plasma torch are reused to produce zinc of high purity; the method as a whole requires no further purification plants since it is substantially reflux-free.

Impure oxides produced by a Waelz furnace can be used directly in the method according to the invention without the need for preliminary leaching in water; the problem of carrying out further refluent water treatment does not therefore arise.

The method according to the invention thus produces the following products:
SHG electrolytic zinc
synthesized hydrochloric acid
Fe₂O₃ iron oxide by calcination of the hydroxide zinc and ammonium chlorides, and
copper cements

If magnesium is present in the feed, it is recovered in the form of magnesium chloride by crystallization together with the zinc and ammonium chloride; if chromium is present in the feed, it is eliminated by coprecipitation together with iron hydroxide, which is transformed into industrial iron oxide by calcination.

Naturally, the principle of the invention remaining the same, the details of implementation may be varied widely with respect to those described and illustrated purely by way of non-limiting example.

A brief legend relating to the flow diagram of the appended drawing is given below.

### FEED MATERIALS

A. galvanizing ash
B. enriched steelworks smoke
B1. pre-enriched steelworks smoke
C. exhausted acid
D. fluxing sludges.

### PRODUCTS

I Fe₂O₃ to steelworks
II Pb/Sn/Cu/Cd cement
III synthesized HCl
IV sodium hypochlorite
V SHG zinc in pigs or large ingots
VI ZnCl₋ + n NH₄Cl

### PRODUCTION CYCLE

1. acid leaching, 1st step
2. settling
3. acid leaching, 2nd step
4. iron oxidation and precipitation reactor, 1st step
5. filtration
6. iron oxidation and precipitation reactor, 2nd step
7. filtration
8. calcination
9. cementation of impurities
10. filtration
11. storage of purified electrolyte
12. storage of exhausted electrolyte
13. electrolyte cooling
14. electrolysis
15. HCl plant
16. treatment with NaOH
17. casting
18. evaporation
19. crystallization
20. centrifuging

## Claims

1. A method of treating metallic dust containing zinc, preferably oxidized waste, particularly galvanizing dust (A), and/or steelworks smoke containing zinc (B), comprising:
- an acid leaching step (1-3) wherein the metallic dust is treated;
- a cementation step (9), carried out by addition of zinc powder on the solution coming from the acid leaching step (1-3) after the separation of the insoluble residue, to bring about precipitation of the metals more noble than zinc in the electrochemical series;
- an electrolysis step (14) carried out on the electrolyte coming from the cementation step (9) to produce electrolytic zinc,
- **characterized in that**:
- the acid leaching step (1, 3) is carried out with hydrochloric acid or exhausted hydrochloric acid in condition such as to bring into solution the metals of the dust, including iron and substantially all the zinc contained therein;
- after the acid leaching step and before the cementation step an oxidation step (4) is provided, the oxidation step being carried out on the leaching solution to convert and precipitate iron in the trivalent state;
- the cementation step is carried out by the addition of, besides zinc powder, copper chloride and possibly antimony trioxide,
- the electrolysis is carried out to produce, besides electrolytic zinc, gaseous chlorine.

2. A method according to claim 1, wherein the acid leaching comprises a first leaching step (1), a second leaching step (3) and a settling step (2) interposed between the first and the second leaching step (1, 3), the metallic dust being fed to the first step (1) together with the solution resulting form the second leaching step (3), the solution from the first leaching step (1) being fed to the oxidation step (4) after settlement in the settling step (2) and the residue of the first leaching step (1), settled in the settling step (2), being fed to the second leaching step (3) with hydrochloric acid.

3. A method according to claim 2, wherein pH in the second leaching step (3) is lower than 2.

4. A method according to any one of the preceding claims, **characterized in that** galvanizing dust and steelworks smoke enriched with zinc, having a zinc content greater than 40% by weight, are fed to the acid leaching step,

5. A method according to any one of the preceding claims, in which the acid-leaching acid is exhausted hydrochloric acid coming from pickling processes.

6. A method according to any one of the preceding claims, **characterized in that** the galvanizing dust has a zinc content, expressed as the oxide, of between 50 and 70% by weight.

7. A method according to any one of the preceding claims, **characterized in that** the acid-leaching step (1-3) is carried out at a pH of between 1 and 4 and at a temperature of between 40 and 90°C.

8. A method according to any one of the preceding claims, in which the oxidation step (4) is carried out by the supply of an oxidizing agent selected, for example, from oxygen, compressed air, hydrogen peroxide and chlorine.

9. A method according to Claim 8, in which any chlorine used as an oxidizing agent in the oxidization step (4) is constituted by the chlorine produced in the electrolysis step (14).

10. A method according to any one of the preceding claims, in which a 1st oxidation step (4) is carried out at a pH of between 1.5 and 3.5 and at a temperature of between 40 and 90°C.

11. A method according to Claim 10, in which the oxidation is carried out in a second step (6) at a pH of between 2.5 and 5, preferably at a pH of 4.5.

12. A method according to any one of the preceding claims, in which the cementation step (9) is carried out with the addition of zinc powder, copper chloride and possibly antimony trioxide, at a pH of between 3.5 and 5.

## Patentansprüche

1. Verfahren zur Behandlung von Zink enthaltendem metallischen Staub, vorzugsweise oxidierter Abfall, insbesondere Galvanisierungsstaub (A), und/oder Zink enthaltender Stahlwerkrauch (B), welches umfasst:
- einen saure Laugungsschritt (1-3), bei welchem der metallische Staub behandelt wird;
- einen Zementationsschritt (9), welcher durchgeführt wird, indem Zinkpulver zu der aus dem saure Laugungsschritt (1-3) kommenden Lösung nach der Abtrennung des unlöslichen Rückstands gegeben wird, um die in der elektrochemischen Reihe edleren Metallen als Zink auszufällen;
- ein Elektrolyseschritt (14), welcher an dem aus dem Zementationsschritt (9) kommenden Elektrolyten durchgeführt wird, um elektrolytisches Zink zu erzeugen,
**dadurch gekennzeichnet, dass**:
- der saure Laugungsschritt (1-3) mit Salzsäure oder verarmter Salzsäure durchgeführt wird, derart, dass die Metalle des Staubs, einschließlich Eisen und im wesentlichen sämtliches darin enthaltenes Zink, in Lösung gebracht werden;
- nach dem sauren Laugungsschritt und vor dem Zementationsschritt ein Oxidationsschritt (4) vorgesehen ist, wobei der Oxidationsschritt an der Laugungslösung durchgeführt wird um das Eisen in dreiwertigen Zustand umzuwandeln und auszufällen;
- der Zementationsschritt neben Zinkpulver durch die Zugabe von Kupferchlorid und gegebenenfalls Antimontrioxid durchgeführt wird,
- die Elektrolyse durchgeführt wird um neben elektrolytischem Zink gasförmiges Chlor zu erzeugen.

2. Verfahren nach Anspruch 1, bei welchem der saure Laugungsschritt einen ersten Laugungsschritt (1), einen zweiten Laugungsschritt (3) und zwischen dem ersten und zweiten Laugungsschritt (1, 3) einen Abscheideschritt (2) umfasst, wobei der metallische Staub zusammen mit der sich aus dem zweiten Laugungsschritt (3) ergebenden Lösung dem ersten Schritt (1) zugeführt wird, die Lösung aus dem ersten Laugungsschritt (1) nach dem Abscheiden in dem Abscheideschritt (2) dem Oxidationsschritt (4) zugeführt wird, und der im Abscheideschritt (2) abgeschiedene Rest des ersten Laugungsschritt (1) mit Salzsäure dem zweiten Laugungsschritt (3) zugeführt wird.

3. Verfahren nach Anspruch 2, bei welchem der pH in dem zweiten Laugungsschritt (3) niedriger als 2 ist.

4. Verfahren nach einem der vorhergehenden Ansprüche, **dadurch gekennzeichnet, dass** Galvanisierungsstaub und mit Zink angereicherter Stahlwerkrauch mit einem Zinkgehalt von größer als 40 Gew.-% dem sauren Laugungsschritt zugeführt wird.

5. Verfahren nach einem der vorhergehenden Ansprüche, bei welchem die Säure zur sauren Laugung aus Abbeizprozessen stammende verarmte Salzsäure ist.

6. Verfahren nach einem der vorhergehenden Ansprüche, **dadurch gekennzeichnet, dass** der Galvanisierungsstaub, ausgedrückt als Oxid, einen Zinkgehalt zwischen 50 und 70 Gew.-% hat.

7. Verfahren nach einem der vorhergehenden Ansprüche, **dadurch gekennzeichnet, dass** der saure Laugungsschritt (1-3) bei einem pH zwischen 1 und 4 und bei einer Temperatur zwischen 40 und 90°C durchgeführt wird.

8. Verfahren nach einem der vorhergehenden Ansprüche, bei welchem der Oxidationsschritt (4) durch die Zugabe eines Oxidationsmittels durchgeführt wird, welches zum Beispiel aus Sauerstoff, Druckluft, Wasserstoffperoxid und Chlor gewählt ist.

9. Verfahren nach Anspruch 8, bei welchem jedes Chlor, das als Oxidationsmittel in dem Oxidationsschritt (4) verwendet wird, das in dem Elektrolyseschritt (14) erzeugte Chlor ist.

10. Verfahren nach einem der vorhergehenden Ansprüche, bei welchem ein erster Oxidationsschritt (4) bei einem pH zwischen 1,5 und 3,5 und bei einer Temperatur zwischen 40 und 90°C durchgeführt wird.

11. Verfahren nach Anspruch 10, bei welchem die Oxidation in einem zweiten Schritt (6) bei einem pH zwischen 2,5 und 5, vorzugsweise bei pH 4,5 durchgeführt wird.

12. Verfahren nach einem der vorhergehenden Ansprüche, bei welchem der Zementationsschritt (9) mit der Zugabe von Zinkpulver, Kupferchlorid und gegebenenfalls Antimontrioxid, bei einem pH zwischen 3,5 und 5 durchgeführt wird.

## Revendications

1. Procédé de traitement d'une poussière métallique contenant du zinc, de préférence un déchet oxydé, en particulier une poussière de galvanisation (A), et/ou une fumée d'aciérie contenant du zinc (B), comprenant :
- une étape de lixiviation à l'acide (1-3) où la poussière métallique est traitée ;
- une étape de cémentation (9) mise en oeuvre par addition de poudre de zinc à la solution provenant de l'étape de lixiviation à l'acide (1-3) après la séparation du résidu insoluble, pour provoquer la précipitation des métaux plus nobles que le zinc dans la série électrochimique;
- une étape d'électrolyse (14) mise en oeuvre sur l'électrolyte provenant de l'étape de cémentation (9) pour produire du zinc électrolytique,
- **caractérisé en ce que** :
- l'étape de lixiviation à l'acide (1, 3) est mise en oeuvre avec de l'acide chlorhydrique ou de l'acide chlorhydrique épuisé dans des conditions permettant la mise en solution des métaux de la poussière, incluant du fer et sensiblement tout le zinc contenu ;
- après l'étape de lixiviation à l'acide et avant l'étape de cémentation, une étape d'oxydation est prévue (4), l'étape d'oxydation étant mise en oeuvre sur la solution de lixiviation pour convertir et précipiter le fer à l'état trivalent ;
- l'étape de cémentation est mise en oeuvre par addition, outre la poudre de zinc, de chlorure de cuivre et éventuellement de trioxyde d'antimoine,
- l'électrolyse est mise en oeuvre pour produire, outre du zinc électrolytique, du chlorure gazeux.

2. Procédé selon la revendication 1, où la lixiviation à l'acide comprend une première étape de lixiviation (1), une seconde étape de lixiviation (3) et une étape de sédimentation (2) située entre la première et la seconde étape de lixiviation (1, 3), la poussière métallique étant amenée à la première étape (1) en même temps que la solution résultant de la seconde étape de lixiviation (3), la solution provenant de la première étape de lixiviation (1) étant amenée à l'étape d'oxydation (4) après sédimentation dans l'étape de sédimentation (2) et le résidu de la première étape de lixiviation (1), sédimenté dans l'étape de sédimentation (2), étant amené à la seconde étape de lixiviation (3) avec de l'acide chlorhydrique.

3. Procédé selon la revendication 2, où le pH dans la seconde étape de lixiviation (3) est inférieur à 2.

4. Procédé selon l'une quelconque des revendications précédentes, **caractérisé en ce que** de la poussière de galvanisation et de la fumée d'aciérie enrichies en zinc, ayant une teneur en zinc supérieure à 40 % en masse, sont amenées à l'étape de lixiviation à l'acide.

5. Procédé selon l'une quelconque des revendications précédentes, où l'acide de lixiviation à l'acide est de l'acide chlorhydrique épuisé provenant de processus de décapage.

6. Procédé selon l'une quelconque des revendications précédentes, **caractérisé en ce que** la poussière de galvanisation a une teneur en zinc, exprimée en oxyde, de 50 à 70 % en masse.

7. Procédé selon l'une quelconque des revendications précédentes, **caractérisé en ce que** l'étape de lixiviation à l'acide (1-3) est mise en oeuvre à un pH de 1 à 4 et à une température de 40 à 90°C.

8. Procédé selon l'une quelconque des revendications précédentes, où l'étape d'oxydation (4) est mise en oeuvre par apport d'un agent oxydant choisi, par exemple, parmi l'oxygène, l'air comprimé, le peroxyde d'hydrogène et le chlore.

9. Procédé selon la revendication 8, où tout le chlore utilisé comme agent oxydant dans l'étape d'oxydation (4) est constitué par le chlore produit dans l'étape d'électrolyse (14).

10. Procédé selon l'une quelconque des revendications précédentes, où une première étape d'oxydation (4) est mise en oeuvre à un pH de 1,5 à 3,5 et à une température de 40 à 90°C.

11. Procédé selon la revendication 10, où l'oxydation est mise en oeuvre dans une seconde étape (6) à un pH de 2,5 à 5, de préférence à un pH de 4,5.

12. Procédé selon l'une quelconque des revendications précédentes, où l'étape de cémentation (9) est mise en oeuvre avec l'addition de poudre de zinc, de chlorure de cuivre et éventuellement de trioxyde d'antimoine, à un pH de 3,5 à 5.
